# FASCICULE DE BREVET EUROPEEN

(11) **EP 1 935 196 B1**
(45) Date de publication et mention de la délivrance du brevet: **03.08.2011**
(21) Numéro de dépôt: 06820190.4
(22) Date de dépôt: 10.10.2006
(51) Int. Cl.: H04W 8/20

(54) **DISPOSITIF DE RADIOCOMMUNICATION COMPRENANT AU MOINS UN MODULE DE RADIOCOMMUNICATION ET UNE CARTE SIM, MODULE DE RADIOCOMMUNICATION ET CARTE SIM CORRESPONDANTS**
FUNKKOMMUNIKATIONSEINRICHTUNG MIT MINDESTENS EINEM FUNKKOMMUNIKATIONSMODUL UND EINER SIM-KARTE, ENTSPRECHENDES FUNKKOMMUNIKATIONSMODUL UND SIM-KARTE
RADIO COMMUNICATION DEVICE COMPRISING AT LEAST ONE RADIO COMMUNICATION MODULE AND ONE SIM CARD, CORRESPONDING RADIO COMMUNICATION MODULE AND SIM CARD

(30) Priorité: 10.10.2005 FR 0510340
(43) Date de publication de la demande: 25.06.2008
(73) Titulaire: Sierra Wireless, 92442 Issy Les Moulineaux Cedex (FR)
(72) Inventeur: MONTES, Jacques, F-94170 Le Perreux-sur-Marne (FR)
(74) Mandataire: Bioret, Ludovic
(86) Numéro de dépôt international: PCT/FR2006/002289
(87) Numéro de publication internationale: WO 2007/042672

(56) Documents cités:
- WO-A-01/76309
- WO-A-95/12293
- WO-A-99/55105
- WO-A-03/077585
- WO-A2-02/080586
- FR-A- 2 843 513

## Description

### 1. Domaine de l'invention

Le domaine de l'invention est celui des radiocommunications à l'aide de terminaux embarquant des cartes SIM (pour « Subscriber Identity Module » ou « Module d'Identification de l'Abonné »).

L'invention s'applique notamment aux échanges avec des terminaux associés à des équipements distants de mesure, détection, traitement... (appelés également, en anglais communications « Machine To Machine » ou communications « M2M »).

Les communications M2M sont par exemple mises en oeuvre pour contrôler des machines distantes, par exemple les compteurs à gaz, les détecteurs de fuite de gaz ou de liquides, les détecteurs de niveau d'eau, les distributeurs automatiques, ou bien d'autres machines encore.

L'invention s'applique également à la mise en oeuvre de moyens de radiocommunication dans les véhicules, et plus généralement dans tous types de terminaux.

L'invention s'applique aussi dans le cadre de la téléphonie mobile (ou « handset »), notamment dans le cas où un utilisateur souhaite changer d'opérateur.

L'invention s'applique également aux communications sans fils à courte distance (ou Wireless Local Loop ») telles que celles mises en oeuvre par les téléphones de bureau fonctionnant sur les réseaux GSM ou GPRS.

### 2. Solutions de l'art antérieur

Classiquement, une carte SIM est un élément externe et amovible par rapport au terminal de communication auquel elle est associée. Elle a en effet pour objectif d'identifier un « abonné », qui peut être conduit à changer de terminal sans vouloir changer son identifiant associé à la carte SIM. Celle-ci est donc disposée dans un logement prévu dans le dispositif de communication.

Les demandes de brevet international WO 02/080586 (ERICSSON TELEFON), WO 99/55105 (MOTOROLA) et WO 03/077585 (SCHLUMBERGER SYSTEMS) concernent des dispositifs de radiocommunication embarquant de telles cartes SIM. La première demande internationale traite d'un terminal mobile adapté pour sélectionner un réseau de communication disponible, la deuxième, d'un terminal de voiture utilisant un jeu de deux cartes SIM, et la troisième, d'un procédé d'activation de cartes SIM dans un réseau GSM.

La carte SIM peut être changée physiquement dans la vie du dispositif de communication, par exemple afin d'obtenir plus de fonctionnalités ou pour changer d'opérateur.

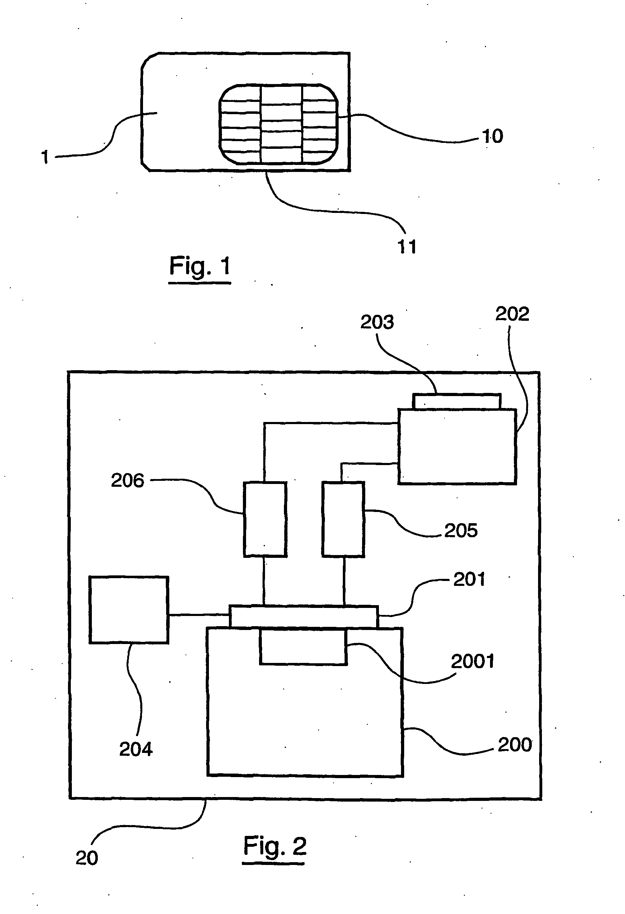

On présente, en relation avec la figure 1, un exemple de carte SIM classique. La puce 10 de la carte SIM 1 est disposée sur un substrat de plastique 11.

Pendant la production des cartes SIM, dans une phase appelée personnalisation de la carte SIM, le fabricant procède à la mise en place dans la carte SIM des fonctions demandées par l'opérateur ainsi qu'au stockage des paramètres de l'opérateur (par exemple des clés secrètes, des algorithmes de cryptage,...).

Dans le cadre d'applications M2M, les modules de communication sont souvent :
- enfouis dans des équipements plus complexes (on peut citer par exemple le cas des modules enfouis dans une voiture ou une machine) ;
- enfouis et difficilement accessibles (on peut citer le cas des compteur d'eau dans des zones géographiques reculées) ;
- soumis à des environnements hostiles en termes notamment de température, d'humidité ou de vibrations.

Ainsi, que ce soit dans le domaine des communications « handset » ou dans le domaine des communications M2M, les cartes SIM sont un maillon faible du dispositif de communication notamment du fait que les contraintes environnementales ne sont généralement pas supportées par les packagings standards des cartes SIM. En tout état de cause, la qualité du montage et des connexions est inférieure à celle de l'ensemble des autres composants du terminal.

Par ailleurs, les cartes SIM imposent une accessibilité au logement destiné à la recevoir. Cette accessibilité nécessaire peut complexifier sensiblement la réalisation du dispositif de communication et donc la rendre plus coûteuse.

En outre, la mise en oeuvre de ce logement génère un certain encombrement et engendre une augmentation du temps de développement des applications installées sur le dispositif, en particulier du fait qu'une partie des signaux du module doit être routé vers la carte SIM.

On connaît, dans l'état de la technique, une méthode permettant de palier ces différents inconvénients. Cette méthode connue, notamment décrite dans le document de brevet FR 2 843 513 et les demandes de brevet internationales WO 01/76309 et WO 95/12293, propose d'intégrer, de façon définitive, la carte SIM dans un terminal (par exemple un téléphone mobile).

### 3. Objectifs de l'invention

L'invention a notamment pour objectif de pallier ces inconvénients de l'art antérieur.

Plus précisément, un objectif de l'invention est de fournir une technique mettant en oeuvre, dans un dispositif de communication, une carte SIM de façon moins sensible aux contraintes environnementales.

Un autre objectif de l'invention, dans au moins un de ses modes de réalisation, est de fournir une telle technique qui n'impose pas à la carte SIM d'être accessible dans le dispositif de communication.

Encore un autre objectif de l'invention est de fournir une telle technique qui permette de réduire l'encombrement du dispositif et le temps de développement des applications mises en oeuvres sur le dispositif.

L'invention, a encore pour objectif de fournir une telle technique qui soit simple à mettre en oeuvre et pour un faible coût.

### 4. Exposé de l'invention

Ces objectifs, ainsi que d'autres qui apparaîtront par la suite, sont atteints à l'aide d'une carte d'identification d'abonné SIM, selon la revendication 1.

On parlera dans la suite de carte SIM interne par opposition à la carte SIM externe classique. Ainsi, l'invention repose sur une approche tout à fait nouvelle et inventive de mise en oeuvre d'une carte SIM pour dispositif de radiocommunication intégrée directement sur une carte de circuit imprimé (ou PCB pour « Printed Circuit Board ») et/ou dans un module de communication du dispositif et comprenant des moyens de mémorisation d'une pile protocolaire minimale permettant un redémarrage basique du module.

De cette façon, en cas de « crash » (ou défaillance logicielle), la pile protocolaire minimale permet d'effectuer une connexion basique à un réseau pour télécharger une pile protocolaire complète et ainsi effectuer un redémarrage basique du module 200. Cette pile protocolaire peut être transférée de la carte SIM interne vers les moyens de traitement en bande de base. Cette pile protocolaire peut être mise à jour au niveau de la carte SIM interne par les moyens de traitement en bande de base en fonction des besoins de la carte SIM interne en pile protocolaire ainsi qu'en toute autre caractéristique.

Par ailleurs, la carte SIM étant intégrée de façon fixe dans le terminal de communication, celle-ci bénéficie de la même protection aux décharges électrostatiques et aux contraintes environnementales (notamment la température, les vibrations et l'humidité) que les autres composants.

Par ailleurs, la carte SIM n'a plus besoin d'être accessible.

Ensuite, le fait d'utiliser une carte SIM intégrée au module permet de réduire la taille du dispositif de communication.

Cela permet également de réduire le temps de développement de la ou des applications du dispositif du fait qu'il n'est pas nécessaire de router des signaux vers une carte SIM externe.

On obtient de facto un ensemble complet de communication (avec la carte SIM incluse) avec des caractéristiques environnementales connues et maîtrisées.

D'autre part, notamment dans le cadre des applications « handset », en bloquant la carte SIM intégrée via le réseau de communication dans lequel est mis en oeuvre le dispositif de radiocommunication, on peut rendre le dispositif ou un module de communication du dispositif inutilisable. Ainsi, on peut empêcher toute tentative d'utilisation frauduleuse du dispositif ou d'un module de communication du dispositif, notamment avec une autre carte SIM.

De plus, la carte SIM intégrée ne pouvant être désolidarisée du dispositif de radiocommunication, elle ne peut être utilisée avec un autre dispositif de radiocommunication.

Avantageusement, le dispositif de communication comprend au moins un module de radiocommunication embarquant lesdits moyens de traitement de signal en bande de base et/ou en radiofréquence et ladite carte SIM interne.

Préférentiellement, la carte SIM interne est solidarisée au module par soudure.

Selon une caractéristique avantageuse de l'invention, la carte SIM interne porte des informations de paramétrage et/ou d'identification du module.

Préférentiellement, les informations de paramétrage comprennent des données de configuration des moyens radiofréquences.

Avantageusement, les informations d'identification comprennent une première clé destinée à être combinée avec une seconde clé présente dans les moyens de traitement du signal, de façon à n'autoriser le fonctionnement du dispositif qu'après vérification que les première et seconde clés sont appariées.

Préférentiellement, la carte SIM interne comprend des moyens de détection d'une défaillance logicielle du module, et des moyens de redémarrage du module.

Avantageusement, le module comprend des moyens de lecture dans la carte SIM interne d'une information indiquant que c'est elle qui a forcé un redémarrage, et des moyens de transmission de l'information à un serveur distant.

Selon un premier mode de réalisation avantageux de l'invention, la carte SIM interne est montée dans un boîtier muni de broches permettant sa soudure sur un module.

Selon un second mode de réalisation avantageux de l'invention, la carte SIM interne est directement solidarisée de façon définitive sur un circuit imprimé du module.

Selon une caractéristique avantageuse de l'invention, la carte SIM interne comprend :
- des moyens de réception d'au moins une information de configuration de la carte SIM interne ;
- des moyens de passage d'une première configuration à une seconde configuration de la carte SIM interne qui tient compte de cette au moins une information de configuration ; et
- des moyens d'information des moyens de traitement de signal en bande de base d'un passage de la première configuration à la seconde configuration.

Préférentiellement, les moyens de traitement de signal en bande de base comprennent :
- des moyens de détection d'au moins une inadaptation de la seconde configuration à au moins une utilisation du dispositif de radiocommunication après que les moyens de passage de la première configuration à la seconde configuration aient été activés ; et
- des moyens de demander à la carte SIM interne d'adopter la première configuration.

Avantageusement, les première et seconde configurations sont adaptées respectivement à un premier et un second réseau de communication.

L'invention concerne également un module de radiocommunication pour dispositif de radiocommunication tel que précédemment décrit.

L'invention concerne également un dispositif de radiocommunication comprenant une première carte SIM, comme la carte SIM interne décrite plus haut, et des moyens de connexion d'une seconde carte d'identification d'abonné SIM, dite carte SIM externe.

Préférentiellement le dispositif de radiocommunication comprend des moyens de désactivation de la première carte SIM, lorsqu'une carte SIM externe est présente dans les moyens de connexion.

Avantageusement, le dispositif de radiocommunication comprend des moyens de sélection d'une des cartes SIM.

Selon une caractéristique préférentielle de l'invention, le dispositif de radiocommunication comprend des moyens de dialogue entre les cartes SIM.

Avantageusement, la carte SIM externe assure des opérations d'enregistrement sur un réseau de radiocommunication, et la première carte SIM assure des opérations internes de paramétrage du module et/ou de contrôle d'une pile protocolaire.

Préférentiellement, la première carte SIM mémorise au moins un paramètre d'autorisation pour la carte SIM externe, de façon à assurer son authentification.

L'invention concerne également un module de radiocommunication pour dispositif de radiocommunication tel que précédemment décrit.

### 5. Liste des figures

D'autres caractéristiques et avantages de l'invention apparaîtront plus clairement à la lecture de la description suivante de deux modes de réalisation préférentiels, donnés à titre de simples exemples illustratifs et non limitatifs, et des dessins annexés, parmi lesquels :
- la figure 1 présente un exemple de carte SIM classique ;
- la figure 2 présente un dispositif de radiocommunication selon un premier mode de réalisation de l'invention, dans lequel on met en oeuvre à la fois une carte SIM interne et une carte SIM, externe telle que celle de la figure 1.

### 6. Description de plusieurs modes de réalisation de l'invention

On présente, en relation avec la figure 2, un exemple de dispositif de radiocommunication 20 (par exemple un compteur de gaz distant) selon un premier mode de réalisation de l'invention dans lequel, on met en oeuvre à la fois une carte SIM interne et une carte SIM externe.

Le dispositif de radiocommunication comprend un module de radiocommunication 200 comprenant lui-même des moyens de traitement de signal en bande de base et en radiofréquence.

Une première carte SIM 201, dite carte SIM interne 201, est montée dans un boîtier (non représenté) muni de broches qui est soudé sur le module 200.

On peut par exemple utiliser un boîtier standard pour monter la carte SIM interne.

Selon une variante (non illustrée) de ce mode de réalisation, la carte SIM interne 201 est directement soudée sur un circuit imprimé du module 200.

Cette carte SIM interne 201 porte des informations de paramétrage et des informations d'identification du module 200.

Les informations de paramétrage comprennent par exemple des données de configuration des moyens de traitement en radiofréquences (par exemple des clés, des données d'authentification radiofréquence,...).

Les informations d'identification comprennent une première clé (constituée par exemple d'identifiants IMSI et ICCID) destinée à être combinée avec une seconde clé (constituée par exemple d'un identifiant IMEI) présente dans les moyens de traitement du signal, de façon à n'autoriser le fonctionnement du dispositif qu'après vérification que les première et seconde clés sont appariées.

On rappelle que :
- l'identifiant ICCID (pour « Integrated Circuit Card ID ») est un numéro identifiant physiquement la carte SIM interne 201 ;
- l'identifiant IMEI (pour « International Mobil Equipment Identity ») constitue l'identité du module de communication 200, cet identifiant IMEI est indépendant de la carte SIM interne 201 ;
- l'identifiant IMSI (pour « International Mobil Subscriber Identity ») permet d'identifier dans un réseau de communication un abonné à ce réseau afin par exemple de pouvoir le facturer.

Le dispositif 20 comprend également des moyens de connexion 202 d'une seconde carte SIM 203, dite carte SIM externe 203. Il comprend également des moyens de désactivation 204 de la carte SIM interne 201, lorsque la carte SIM externe 203 est présente dans les moyens de connexion 202, et des moyens de sélection 205 d'une des cartes SIM.

En effet, le module ne peut être enregistré que sur un seul opérateur et avec une seule carte SIM, ainsi, généralement, lorsque la carte SIM externe 203 est présente, la carte SIM interne est désactivée par les moyens de désactivation 204.

Cependant, le dispositif de radiocommunication 20 comprend également des moyens de dialogue 206 entre les cartes SIM.

En effet, on peut (par des interfaces tels que deux bus SIM gérés par le module, et notamment la partie « bande de base »), mettre en oeuvre un dialogue entre les deux cartes SIM. Dans ce cas la carte SIM externe 203 assure par exemple des opérations d'enregistrement sur un réseau de radiocommunication et carte SIM interne assure des opérations internes de paramétrage du module 200 et/ou de contrôle d'une pile protocolaire.

Par ailleurs, la carte SIM interne 201 peut jouer un rôle d'authentification de la carte SIM externe 203, en mémorisant certains paramètres d'autorisation pour la carte SIM externe (par exemple des ensembles d'opérateurs alloués, des fonctions autorisées,...).

Ainsi, on peut, dans certaines applications, avoir un fonctionnement simultané des deux cartes SIM.

La carte SIM interne 201 étant physiquement fortement liée au module 200, elle peut être utilisée comme complément du module 200 pour réaliser certaines fonctions.

On peut par exemple écrire ou lire, sur cette carte interne 201, des informations de paramétrage du module (par exemple des clés, des données d'authentification radiofréquence,...).

On peut également écrire ou lire, sur des moyens de mémorisation de la carte SIM interne 201, une pile protocolaire minimale permettant, en cas de « crash » (ou défaillance logicielle) du module 200, d'effectuer une connexion basique à un réseau pour télécharger une pile protocolaire complète et ainsi effectuer un redémarrage basique du module 200.

Cette pile protocolaire peut être transférée de la carte SIM interne 201 vers les moyens de traitement en bande de base. Cette pile protocolaire peut être mise à jour au niveau de la carte SIM interne 201 par les moyens de traitement en bande de base en fonction des besoins de la carte SIM interne 201 en pile protocolaire ainsi qu'en toute autre caractéristique.

La carte SIM interne 201 permet aussi d'effectuer une surveillance du module 200 en lui-même. Pour ce faire, elle comprend des moyens de détection (non représentés) d'une défaillance logicielle du module 200 et des moyens de redémarrage du module 200. Le module 200 comprend des moyens de lecture 2001 dans la carte SIM interne 201 d'une information indiquant que c'est elle qui a forcé un redémarrage, et des moyens de transmission de cette information à un serveur distant (non représenté).

Ainsi lorsqu'elle détecte un crash du module 200, la carte SIM interne 201 redémarre le module 200, puis ce dernier lit dans la carte SIM interne 201 une information lui permettant de savoir si son démarrage à été forcé par la carte SIM interne, puis le module 200 en avertit un serveur distant.

La carte SIM interne 201 permet d'obtenir une identification forte des constituants du dispositif de radiocommunication 20 grâce à la mise en oeuvre d'une identification entre la carte SIM interne 201 qui comprend la première clé précitée et le module 200 qui comprend la seconde clé précitée par vérification de l'appariement des première et seconde clés après que celles-ci aient été combinées.

Ainsi, et afin d'éviter toute utilisation du module 200 ou de la carte SIM interne 201 séparément l'un de l'autre (par exemple dans le cas d'espionnage industriel), la carte SIM 201 ne peut fonctionner qu'avec le module 200 qui lui est spécifiquement destiné et vice-versa.

Afin de satisfaire certaines normes prévoyant que des tests électriques et fonctionnels doivent pouvoir être mis en oeuvre sur la carte SIM , une interface SIM sur laquelle peut être disposé un outil de test est prévue sur le module 200.

On prévoit donc dans ce cas de garder une connexion externe avec la carte SIM interne 200, au moins pour ces tests.

Comme on l'a vu précédemment, lorsque la carte SIM externe 203 est détectée, le module 200 peut décider de désactiver (grâce aux moyens de désactivation 204) la carte SIM interne 201 pour ne travailler qu'avec la carte SIM externe 203. Cependant, on peut également prévoir, au moins pour les tests précités, une sélection manuelle de la carte SIM activée grâce aux moyens de sélection 205 précités.

Selon un second mode de réalisation (non illustré) de l'invention, aucune carte SIM externe 203 ni de moyens de connexion 202 à une telle carte SIM externe n'est mis en oeuvre dans le dispositif de communication 20.

On peut noter que lors de la mise en place de l'opérateur définitif dans la carte SIM interne 201, deux cas de figures peuvent se présenter :
- soit l'opérateur est connu dès la phase de production de la carte SIM, alors la phase de personnalisation précitée de la carte SIM, mise en oeuvre soit par le fabriquant de module soit par le fabricant de carte SIM en boîtier, est donc suffisante ;
- soit l'opérateur n'est pas connu lors de la phase de production de la carte SIM, alors un opérateur par défaut est enregistré dans la carte. Cette information permettra par la suite de se connecter au réseau, et d'effectuer un changement d'opérateur dans une phase dite de «Post Allocation ». Selon un mode de mise en oeuvre préférentiel de l'invention, des données (ou informations) de configuration de la carte SIM interne 201 (par exemple des données de téléchargement, généralement appelées « DataDownload ») peuvent être transmises à des moyens de réception adaptés de la carte SIM interne 201 sans intervention des moyens de traitement en bande de base. Ces données sont préférentiellement cryptées et non lisibles.

Ces données de configuration peuvent comprendre l'IMSI de l'utilisateur du dispositif de communication 20. Cependant, dans le cas où la carte SIM interne 201 embarque plusieurs IMSI, ces données de configuration peuvent ne comprendre qu'une information permettant à la carte SIM interne 201 de retrouver quelle IMSI elle doit sélectionner.

Ainsi, ces données de configuration peuvent être des données réseau qui permettent à la carte SIM interne 201 (en passant d'une première configuration correspondant à un premier réseau de communication à une seconde configuration correspondant à un second réseau) de changer son identité réseau, voir même de changer d'opérateur.

Après que la carte SIM a effectué un changement de données en son sein, elle en informe les moyens de traitement de signal en bande de base en leur précisant quels sont les fichiers qui ont changé et en demandant éventuellement une réinitialisation de la carte SIM interne 201 afin d'effectuer un redémarrage et donc potentiellement un nouvel enregistrement réseau.

Si, après changement de configuration (de la première configuration à la seconde configuration) de la carte SIM interne 201, une inadaptation de la seconde configuration à une utilisation du dispositif de radiocommunication 20 est détectée par les moyens de traitement de signal en bande de base, ces derniers ont la possibilité de demander à la carte SIM interne 201 de se reconfigurer selon la première configuration.

Si l'on se place dans le cas particulier où les données de configuration sont l'IMSI, après prise en compte par la carte SIM interne 201 des données réseau correspondant au second réseau de communication (passage de la première configuration à la seconde configuration de la carte SIM interne 201) et réinitialisation de la carte SIM interne 201, le second réseau peut ne pas être disponible ce qui empêche toute utilisation du dispositif de radiocommunication 20 pour communiquer (la seconde configuration est alors inadaptée pour l'utilisation du dispositif 20 en communication).

Après que les moyens de traitement de signal en bande de base ont détecté (par exemple au terme d'un délai prédéterminé) le fait que le dispositif de communication 20 ne peut pas communiquer, ils demandent à la carte SIM interne 201 de se replacer dans la première configuration (correspondant au premier réseau de communication) ce qui a pour effet de mettre en oeuvre une nouvelle connexion au premier réseau.

Préférentiellement, les moyens de traitement de signal en bande de base ou la carte SIM interne 201 utilise cette connexion au premier réseau pour informer un serveur distant des faits.

## Revendications

1. Carte d'identification d'abonné SIM (201) pour dispositif de radiocommunication comprenant au moins un module de radiocommunication (200) comprenant des moyens de traitement de signal en bande de base et/ou en radiofréquence montés sur un support, ladite carte d'identification d'abonné SIM étant une carte d'identification d'abonné SIM interne, solidarisée de façon définitive audit support,
ladite carte SIM (201) étant **caractérisée en ce qu'**elle comprend des moyens de mémorisation d'une pile protocolaire minimale adaptée pour effectuer une connexion basique à un réseau de communication afin de télécharger une pile protocolaire complète permettant un redémarrage basique dudit module (200).

2. Carte d'identification d'abonné SIM (201) selon la revendication 1, **caractérisée en ce qu'**elle est solidarisée audit module (200) par soudure.

3. Carte d'identification d'abonné SIM (201) selon l'une quelconque des revendications 1 et 2, **caractérisée en ce qu'**elle porte des informations de paramétrage et/ou d'identification dudit module.

4. Carte d'identification d'abonné SIM (201) selon la revendication 3, **caractérisée en ce que** lesdites informations de paramétrage comprennent des données de configuration desdits moyens radiofréquences.

5. Carte d'identification d'abonné SIM (201) l'une quelconque des revendications 3 et 4, **caractérisée en ce que** lesdites informations d'identification comprennent une première clé destinée à être combinée avec une seconde clé présente dans lesdits moyens de traitement du signal, de façon à n'autoriser le fonctionnement dudit dispositif (20) qu'après vérification que lesdites première et seconde clés sont appariées.

6. Carte d'identification d'abonné SIM (201) selon l'une quelconque des revendications 1 à 5, **caractérisée en ce que** ladite carte SIM (201) comprend des moyens de détection d'une défaillance logicielle dudit module (200), et des moyens de redémarrage dudit module.

7. Carte d'identification d'abonné SIM (201) selon la revendication 6, **caractérisée en ce que** ledit module (200) comprend des moyens de lecture (2001) dans ladite carte SIM (201) d'une information indiquant que c'est elle qui a forcé un redémarrage, et des moyens de transmission de ladite information à un serveur distant.

8. Carte d'identification d'abonné SIM (201) selon l'une quelconque des revendications 1 à 7, **caractérisée en ce qu'**elle est montée dans un boîtier muni de broches permettant sa soudure sur un module.

9. Carte d'identification d'abonné SIM (201) selon l'une quelconque des revendications 1 à 7, **caractérisée en ce qu'**elle est directement solidarisée de façon définitive sur un circuit imprimé dudit module.

10. Carte d'identification d'abonné SIM (201) selon l'une quelconque des revendications 1 à 9, **caractérisée en ce qu'**elle comprend :
- des moyens de réception d'au moins une information de configuration de la carte SIM (201) ;
- des moyens de passage d'une première configuration à une seconde configuration de la carte SIM (201) qui tient compte de cette au moins une information de configuration ; et
- des moyens d'information des moyens de traitement de signal en bande de base d'un passage de la première configuration à la seconde configuration.

11. Carte d'identification d'abonné SIM (201) selon la revendication 10, **caractérisée en ce que** lesdits moyens de traitement de signal en bande de base comprennent :
- des moyens de détection d'au moins une inadaptation de ladite seconde configuration à au moins une utilisation du dispositif de radiocommunication après que les moyens de passage de la première configuration à la seconde configuration aient été activés ; et
- des moyens de demander à la carte SIM (201) d'adopter la première configuration.

12. Carte d'identification d'abonné SIM (201) selon l'une quelconque des revendications 10 et 11, **caractérisée en ce que** les première et seconde configurations sont adaptées respectivement à un premier et un second réseau de communication.

13. Dispositif de radiocommunication **caractérisé en ce qu'**il comprend une première carte SIM selon l'une quelconque des revendications 1 à 12, dite carte SIM interne (201),
et **en ce qu'**il comprend des moyens de connexion (202) d'une seconde carte d'identification d'abonné SIM, dite carte SIM externe (203).

14. Dispositif de radiocommunication selon la revendication 13, **caractérisé en ce qu'**il comprend des moyens de désactivation (204) de ladite carte SIM interne (201), lorsqu'une carte SIM externe (203) est présente dans lesdits moyens de connexion (202).

15. Dispositif de radiocommunication selon la revendication 14, **caractérisé en ce qu'**il comprend des moyens de sélection (205) d'une desdites cartes SIM.

16. Dispositif de radiocommunication selon l'une quelconque des revendications 13 à 15, **caractérisé en ce qu'**il comprend des moyens de dialogue (206) entre lesdites cartes SIM.

17. Dispositif de radiocommunication selon la revendication 16, **caractérisé en ce que** ladite carte SIM externe (203) assure des opérations d'enregistrement sur un réseau de radiocommunication, et ladite carte SIM interne (201) assure des opérations internes de paramétrage dudit module (200) et/ou de contrôle d'une pile protocolaire.

18. Dispositif de radiocommunication selon l'une quelconque des revendications 13 à 17, **caractérisé en ce que** ladite carte SIM interne (201) mémorise au moins un paramètre d'autorisation pour ladite carte SIM externe (203), de façon à assurer son authentification.

19. Module (200) pour dispositif de radiocommunication, ledit module comprenant des moyens de traitement de signal en bande de base et/ou en radiofréquence,
ledit module étant **caractérisé en ce qu'**il comprend une carte SIM selon l'une quelconque des revendications 1 à 12, dite carte SIM interne (201).

## Claims

1. Subscriber identification SIM card (201) for radio communication device comprising at least one radio communication module (200) including baseband and/or radio frequency signal processing means mounted on a support, said subscriber identification SIM card being an internal subscriber identification SIM card, definitively secured to said support,
said SIM card (201) being **characterised in that** it comprises means for storing a minimal protocol stack capable of carrying out a basic connection to a communication network in order to download a complete stack which allows a basic reboot of said module (200).

2. Subscriber identification SIM card (201) according to claim 1, **characterised in that** it is secured to said module (200) by welding.

3. Subscriber identification SIM card (201) according to any one of claims 1 to 2, **characterised in that** it carries information for parameterising and/or identifying said module.

4. Subscriber identification SIM card (201) according to claim 3, **characterised in that** said parameterisation information comprise data for configuring said radio frequency means.

5. Subscriber identification SIM card (201) according to any one of claims 3 and 4, **characterised in that** said identification information comprise a first key intended to be combined with a second key present in said signal processing means, so as to allow operation of said device (20) only after checking that said first and second keys match.

6. Subscriber identification SIM card (201) according to any one of claims 1 to 5, **characterised in that** said SIM card (201) comprises means for detecting a software fault of said module (200), and means for rebooting said module.

7. Subscriber identification SIM card (201) according to claim 6, **characterised in that** said module (200) comprises reading means (2001) for reading from said SIM card (201) a piece of information indicating that it is said SIM card that has forced a reboot, and means for transmitting said piece of information to a remote server.

8. Subscriber identification SIM card (201) according to any one of claims 1 to 7, **characterised in that** it is fitted in a casing equipped with pins allowing it to be welded to a module.

9. Subscriber identification SIM card (201) according to any one of claims 1 to 7, **characterised in that** it is definitively and directly secured to a printed circuit of said module.

10. Subscriber identification SIM card (201) according to any one of claims 1 to 9, **characterised in that** it comprises:
- means for receiving at least one piece of information for configuring said SIM card (201);
- means for switching from a first configuration to a second configuration of the SIM card (201) which takes account of this at least one piece of configuration information; and
- means for informing the baseband signal processing means of a switch from the first configuration to the second configuration.

11. Subscriber identification SIM card (201) according to claim 10, **characterised in that** the baseband signal processing means comprise:
- means for detecting at least one unsuitability of said second configuration for at least one use of the radio communication device after the means for switching from the first configuration to the second configuration have been activated; and
- means for asking the SIM card (201) to adopt the first configuration.

12. Subscriber identification SIM card (201) according to any one of claims 10 and 11, **characterised in that** the first and second configurations are adapted respectively to a first and a second communication network.

13. Radio communication device **characterised in that** it comprises a first SIM card according to anyone of claims 1 to 12, referred to as internal SIM card (201),
and **in that** it comprises connection means (202) for connecting a second subscriber identification SIM card, referred to as external SIM card (203).

14. Radio communication device according to claim 13, **characterised in that** it comprises deactivation means (204) for deactivating said internal SIM card (201) when an external SIM card (203) is present in said connection means (202).

15. Radio communication device according to claim 14, **characterised in that** it comprises selection means (205) for selecting one of said SIM cards.

16. Radio communication device according to any one of claims 13 to 15, **characterised in that** it comprises dialogue means (206) for dialoguing between said SIM cards.

17. Radio communication device according to claim 16, **characterised in that** said external SIM card (203) performs operations for registering on a radio communication network, and said internal SIM card (201) performs internal operations for parameterising said module (200) and/or controlling a protocol stack.

18. Radio communication device according to any one of claims 13 to 17, **characterised in that** said internal SIM card (201) stores at least one authorisation parameter for said external SIM card (203), so as to carry out the authentication thereof.

19. Module (200) for a radio communication device, said module comprising baseband and/or radio frequency signal processing means,
**characterised in that** it comprises a SIM card according to anyone of claims 1 to 12, referred to as internal SIM card (201).

## Patentansprüche

1. Abonnierte SIM-Identifikationskarte (201) für ein Funkkommunikationsgerät aufweisend mindestens ein Funkkommunikationsmodul (200), das auf einem Träger eingebaute Mittel zum Verarbeiten von Signalen im Basisband und/oder von Hochfrequenzsignalen aufweist, wobei die abonnierte SIM-Identifikationskarte eine interne abonnierte SIM-Identifikationskarte ist, die in einer definitiven Weise an den Träger gebunden ist,
wobei die SIM-Karte (201) **dadurch gekennzeichnet ist, dass** sie Mittel zum Speichern eines minimalen protokollarischen Stapels aufweist, der geeignet ist, eine Basisverbindung mit einem Kommunikationsnetzwerk aufzubauen, um einen kompletten protokollarischen Stapel herunterzuladen, der einen Basisneustart des Moduls (200) ermöglicht.

2. Abonnierte SIM-Identifikationskarte (201) nach Anspruch 1, **dadurch gekennzeichnet, dass** sie durch Löten an das Modul (200) gebunden ist.

3. Abonnierte SIM-Identifikationskarte (201) nach einem der Ansprüche 1 und 2, **dadurch gekennzeichnet, dass** sie Parameterinformationen und/oder Identifikationsinformationen des Moduls trägt.

4. Abonnierte SIM-Identifikationskarte (201) nach Anspruch 3, **dadurch gekennzeichnet, dass** die Parameterinformationen Konfigurationsdaten der Hochfrequenzmittel aufweisen.

5. Abonnierte SIM-Identifikationskarte (201) nach einem der Ansprüche 3 und 4, **dadurch gekennzeichnet, dass** die Identifikationsinformationen einen ersten Schlüssel aufweisen, der zum Kombinieren mit einem zweiten Schlüssel, der in den Mitteln zum Verarbeiten von Signalen vorhanden ist, in einer Weise vorgesehen ist, die Funktionsfähigkeit des Geräts (20) erst nach Verifikation, dass der erste und zweite Schlüssel gepaart sind, zuzulassen.

6. Abonnierte SIM-Identifikationskarte (201) nach einem der Ansprüche 1 bis 5, **dadurch gekennzeichnet, dass** die SIM-Karte (201) Mittel zum Feststellen eines Softwarefehlers des Moduls (200) und Mittel zum Neustarten des Moduls aufweist.

7. Abonnierte SIM-Identifikationskarte (201) nach Anspruch 6, **dadurch gekennzeichnet, dass** das Modul (200) Mittel zum Lesen (2001) einer Information in der SIM-Karte (201), die angibt, dass sie den Neustart verursacht hat, und Mittel zum Übertragen der Information an einen entfernten Server aufweist.

8. Abonnierte SIM-Identifikationskarte (201) nach einem der Ansprüche 1 bis 7, **dadurch gekennzeichnet, dass** sie in einem mit Stiften versehenen Gehäuse eingebaut ist, die deren Anlöten an ein Modul ermöglichen.

9. Abonnierte SIM-Identifikationskarte (201) nach einem der Ansprüche 1 bis 7, **dadurch gekennzeichnet, dass** sie auf eine definitive Weise auf eine aufgedruckte Schaltung des Moduls gebunden ist.

10. Abonnierte SIM-Identifikationskarte (201) nach einem der Ansprüche 1 bis 9, **dadurch gekennzeichnet, dass** sie aufweist:
- Mittel zum Empfangen von mindestens einer Konfigurationsinformation der SIM-Karte (201);
- Mittel zum Umstellen von einer ersten Konfiguration zu einer zweiten Konfiguration der SIM-Karte (201), die diese mindestens eine Konfigurationsinformation berücksichtigen; und
- Mittel zum Informieren der Mittel zum Verarbeiten von Signalen im Basisband über eine Umstellung von der ersten Konfiguration zu der zweiten Konfiguration.

11. Abonnierte SIM-Identifikationskarte (201) nach Anspruch 10, **dadurch gekennzeichnet, dass** die Mittel zum Verarbeiten von Signalen im Basisband aufweisen:
- Mittel zum Feststellen von mindestens einer mangelhaften Anpassung der zweiten Konfiguration in mindestens einer Verwendung des Funkkommunikationsgeräts, nachdem die Mittel zum Umstellen von der ersten Konfiguration zu der zweiten Konfiguration aktiviert wurden; und
- Mittel zum Auffordern der SIM-Karte (201), die erste Konfiguration zu übernehmen.

12. Abonnierte SIM-Identifikationskarte (201) nach einem der Ansprüche 10 und 11, **dadurch gekennzeichnet, dass** die erste und zweite Konfiguration jeweils an ein erstes und ein zweites Kommunikationsnetzwerk angepasst sind.

13. Funkkommunikationsgerät, **dadurch gekennzeichnet, dass** es eine erste SIM-Karte nach einem der Ansprüche 1 bis 12, eine so genannte interne SIM-Karte (201), aufweist, und dass es Mittel zum Verbinden (202) einer zweiten abonnierten SIM-Identifikationskarte, eine so genannte externe SIM-Karte (203), aufweist.

14. Funkkommunikationsgerät nach Anspruch 13, **dadurch gekennzeichnet, dass** es Mittel zum Deaktivieren (204) der internen SIM-Karte (201) aufweist, sobald eine externe SIM-Karte (203) in den Mitteln zum Verbinden (202) vorhanden ist.

15. Funkkommunikationsgerät nach Anspruch 14, **dadurch gekennzeichnet, dass** es Mittel zum Auswählen (205) einer der SIM-Karten aufweist.

16. Funkkommunikationsgerät nach einem der Ansprüche 13 bis 15, **dadurch gekennzeichnet, dass** es Mittel (206) zum Dialog zwischen den SIM-Karten aufweist.

17. Funkkommunikationsgerät nach Anspruch 16, **dadurch gekennzeichnet, dass** die externe SIM-Karte (203) die Registrierungsvorgänge in einem Funkkommunikationsnetzwerk sicherstellt und dass die interne SIM-Karte (201) die internen Vorgänge zur Parametrierung des Moduls (200) und/oder zum Kontrollieren eines protokollarischen Stapels sicherstellt.

18. Funkkommunikationsgerät nach einem der Ansprüche 13 bis 17, **dadurch gekennzeichnet, dass** die interne SIM-Karte (201) mindestens einen Autorisierungsparameter für die externe SIM-Karte (203) so speichert, dass deren Authentifizierung sichergestellt wird.

19. Modul (200) für ein Funkkommunikationsgerät, wobei das Modul Mittel zum Verarbeiten von Signalen im Basisband und/oder von Hochfrequenzsignalen aufweist, wobei das Modul **dadurch gekennzeichnet ist, dass** es eine SIM-Karte nach einem der Ansprüche 1 bis 12, eine so genannte interne SIM-Karte (201), aufweist.
